# FASCICULE DE BREVET EUROPEEN

(11) **EP 0 604 286 B1**
(45) Date de publication et mention de la délivrance du brevet: **28.08.1996**
(21) Numéro de dépôt: 93403083.4
(22) Date de dépôt: 17.12.1993
(51) Int. Cl.: F16B 5/10, F16B 21/04, F16B 21/02, F16B 7/20

(54) **Dispositif de liaison entre deux pièces mécaniques**
Verbindungselement zwischen zwei Bauteilen
Connecting element for two mechanical parts

(30) Priorité: 21.12.1992 US 993836
(43) Date de publication de la demande: 29.06.1994
(73) Titulaire: HUTCHINSON, F-75008 Paris (FR)
(72) Inventeur: Bergers, Jeffrey Lawrence, Grand Rapids, Michigan 49504 (US); Houston, Terry Lynn, Walker, Michigan 49504 (US)
(74) Mandataire: Picard, Jean-Claude Georges

(56) Documents cités:
- EP-A- 0 094 663
- GB-A- 2 171 447
- US-A- 3 776 649

## Description

La présente invention concerne un dispositif de liaison entre deux pièces mécaniques en tôle, ladite liaison devant empêcher, après sa mise en oeuvre, les deux pièces de pivoter l'une par rapport à l'autre autour d'un axe perpendiculaire à leur plan de jonction, l'une desdites pièces comportant à cet effet au moins une encoche en arc de cercle centrée sur ledit axe et présentant une première zone arquée possédant radialement une première largeur et une seconde zone arquée possédant radialement une seconde largeur, plus petite que ladite première largeur, cette seconde zone, considérée selon un sens de rotation déterminé autour dudit axe, faisant suite à la première zone.

On connaît déjà de tels dispositifs par les documents US-A-3 776 649 et EP-A-0 094 663.

L'invention est destinée plus particulièrement à assurer la fixation d'un plot élastique sur le berceau d'un véhicule automobile, ce berceau pouvant porter par exemple le groupe motopropulseur et le train avant, et plusieurs de ces plots étant destinés à assurer une liaison élastique entre ce berceau et le châssis du véhicule. Habituellement, l'armature rigide extérieure d'un tel plot est fixée sur le berceau par trois ou même quatre systèmes vis-écrou, ce qui n'est pas économique, ni du point de vue de la matière, ni du point de vue du temps de montage. Ensuite, un boulon est introduit dans une armature tubulaire intérieure du plot, pour en assurer la fixation sur le châssis du véhicule.

Dans ce type d'application il est souhaitable d'obtenir un double blocage, c'est-à-dire non seulement un blocage empêchant toute rotation relative entre les deux pièces, mais encore un blocage propre à les mettre et à les maintenir en pression l'une contre l'autre selon un plan de jonction commun, ceci pour éviter entre les deux pièces tout jeu générateur de bruit et d'usure. Les dispositifs de type connu mentionnés plus haut ne permettent pas d'obtenir cette seconde caractéristique de blocage.

Le but de la présente invention est de combler cette lacune et également d'obtenir un dispositif de liaison permettant de rendre beaucoup plus rapide et économique la fixation de l'armature d'un tel plot sur le berceau, ou tout autre partie d'un véhicule et, de façon plus générale, la fixation l'une sur l'autre de deux pièces en tôle quelconque, lorsque l'on veut éviter l'utilisation de nombreux systèmes du type vis-écrou.

A cette fin, un dispositif de liaison conforme à l'invention se caractérise par le fait que ladite encoche en arc de cercle présente en outre une troisième zone disposée entre la première zone et la seconde zone, cette troisième zone ayant radialement une largeur progressivement décroissante dans ledit sens de rotation déterminé, cette largeur ayant comme valeur maximale celle de ladite première zone arquée, et comme valeur minimale une largeur au plus égale à celle de ladite seconde zone arquée ; en ce que l'autre desdites pièces comporte au moins une patte élastique en flexion et propre à s'engager dans ladite première zone arquée de l'encoche précitée lorsque les deux pièces sont amenées l'une contre l'autre, ladite patte ayant à cet effet, en direction radiale, une largeur légèrement inférieure à celle de ladite première zone arquée, mais supérieure à celle de ladite seconde zone arquée, de sorte que la rotation relative de ladite autre pièce autour de l'axe précité, dans ledit sens de rotation déterminé, assure le double blocage susmentionné des deux dites pièces l'une par rapport à l'autre, et en ce que ladite patte est obtenue par découpage et pliage de la tôle de ladite autre pièce et est conformée de manière à prendre appui élastiquement contre ladite rampe de la troisième zone arquée, lors de sa rotation dans ledit sens de rotation déterminé, la hauteur moyenne de l'espace ménagé entre la surface inférieure de la patte et le plan supérieur de la tôle constituant la pièce correspondante étant légèrement inférieure à l'épaisseur de la tôle comportant l'encoche en arc de cercle.

Avantageusement, ladite valeur minimale de la largeur radiale de la troisième zone arquée est inférieure à celle de la seconde zone arquée, de sorte à constituer pour ladite patte une butée de blocage l'empêchant, lorsqu'elle a été introduite dans ladite seconde zone arquée, de pivoter dans le sens de rotation opposé audit sens de rotation déterminé, et de revenir ainsi dans ladite première zone arquée.

On pourra prévoir par exemple que l'un des bords de l'encoche en arc de cercle présente la forme d'un arc de cercle dans ladite première zone et la forme d'un arc de cercle de rayon différent du précédent dans ladite seconde zone, ces deux arcs de cercle étant reliés par une rampe constituant le bord correspondant de ladite troisième zone arquée.

Un dispositif conforme à l'invention peut encore se caractériser en ce que sont prévues deux encoches en arc de cercle préférablement symétriques l'une de l'autre par rapport audit axe, ainsi que deux pattes élastiques disposées l'une par rapport à l'autre dans la même position relative que lesdites encoches, de sorte à pouvoir s'engager chacune et respectivement, simultanément dans la première zone arquée desdites encoches lors de la mise en oeuvre de ladite liaison.

Dans ce cas, il sera encore avantageux de prévoir que lesdites pièces en tôle comportent un système de centrage relatif disposé intérieurement par rapport auxdites encoches et présentant sur l'une desdites pièces une ouverture circulaire, et sur l'autre pièce un collet à section circulaire, propre à s'engager dans ladite ouverture lors de la mise en oeuvre de ladite liaison.

Par exemple, ladite ouverture circulaire est ménagée dans la pièce qui comporte lesdites encoches en arc de cercle, et ledit collet dans la pièce qui comporte lesdites pattes, ce qui est plus commode à fabriquer, puisque toutes les parties à emboutir sont alors situées sur la même pièce, l'autre pièce étant seulement découpée.

L'invention porte encore sur un plot élastique, en particulier destiné à assurer une liaison élastique entre un berceau et un châssis de véhicule, du type comprenant une masse de matière élastique adhérisée autour d'un tube de passage rigide ainsi qu'entre une plaque d'armature et une pièce en tôle, cette pièce en tôle étant assujettie sur ledit berceau grâce à un dispositif de liaison conforme à ce qui vient d'être décrit, et le plot pouvant ensuite être fixé sur ledit châssis grâce à un unique boulon traversant ledit tube et fixé au châssis par un écrou de serrage.

Un mode de réalisation de l'invention va maintenant être décrit à titre d'exemple nullement limitatif, avec référence aux figures du dessin ci-annexé dans lequel :
- la figure 1 est une vue en plan d'une partie de la pièce qui comporte lesdites encoches en arc de cercle ;
- la figure 2 est une vue en plan de la pièce qui comporte lesdites pattes élastiques ;
- la figure 3 est une vue en coupe selon la ligne III-III de la figure 2 ;
- la figure 4 est une vue en coupe axiale, selon la ligne IV-IV de la figure 5, d'un plot de fixation élastique fixé sur un berceau grâce à un dispositif conforme à la présente invention ; et
- la figure 5 est une vue de dessus du plot de la figure 4.

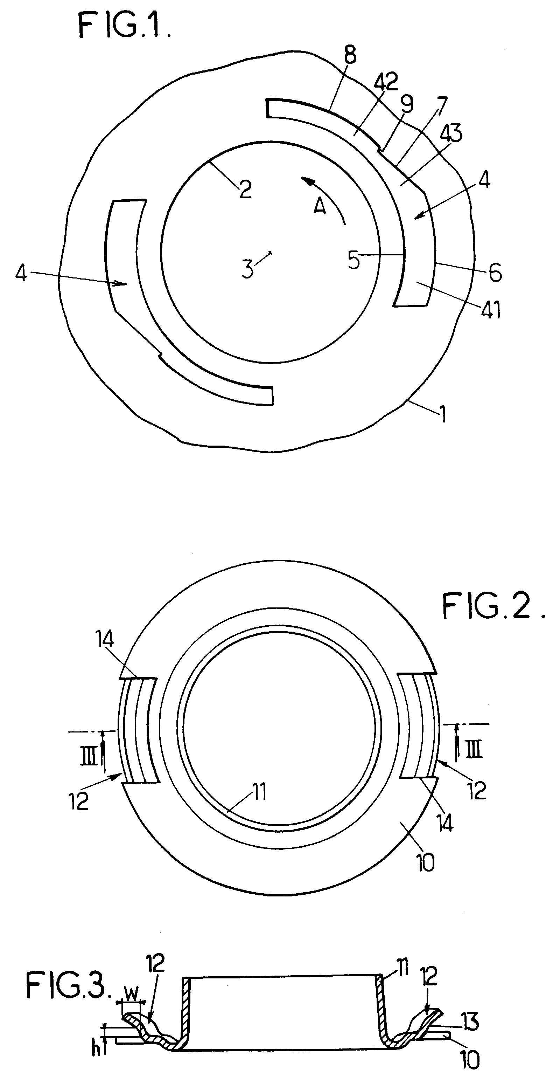

La partie de la pièce en tôle qui est représentée sur la figure 1 est référencée en 1 ; elle comporte une ouverture circulaire 2 dont le centre est référencé 3. Cette pièce comporte, de part et d'autre de cette ouverture 2, deux encoches arquées 4 qui, avantageusement, sont identiques et symétriques l'une de l'autre par rapport au centre 3. Il est donc nécessaire de n'en décrire qu'une seule, par exemple celle de droite sur le dessin. Le bord radialement intérieur 5 de cette encoche est un arc de cercle concentrique à l'ouverture 2 ; son bord radialement extérieur comporte, selon le sens de rotation représenté par la flèche A, un arc de cercle 6, une rampe rectiligne 7 et un arc de cercle 8, ces deux arcs de cercle étant aussi concentriques à l'ouverture 2 mais l'arc de cercle 8 ayant un rayon notablement inférieur à celui de l'arc de cercle 6. De la sorte, l'encoche en arc de cercle 4 présente une première zone arquée 41 dont la largeur radiale est supérieure à celle de sa seconde zone arquée 42 ; quant à la troisième zone arquée 43, elle est de largeur progressivement décroissante selon le sens de rotation A ; sa largeur radiale maximale est égale à la largeur radiale de la zone 41, et sa largeur radiale minimale est inférieure à la largeur de la zone 42, de sorte à constituer à son extrémité avant une butée radiale de blocage 9.

L'autre pièce de la liaison est référencée en 10 sur les figures 2 et 3. Elle présente un collet 11 à section circulaire, propre à s'engager dans l'ouverture 2 de la pièce 1. De part et d'autre de ce collet 11 sont découpées dans la tôle deux pattes élastiques 12 avantageusement identiques et diamétralement opposées l'une à l'autre, dans une position relative telle qu'elles puissent s'engager respectivement et simultanément dans les zones arquées 41 des encoches 4 de la pièce 1 lorsque la liaison entre les deux pièces est mise en oeuvre. A cet effet, la largeur radiale W de ces pattes, vues en plan, est bien entendu légèrement inférieure à la largeur radiale des zones arquées 41, tout en restant supérieure à la largeur radiale des zones arquées 42.

De la sorte, on conçoit qu'après pénétration du collet 11 de la pièce 10, par en dessous, dans l'ouverture 2 de la pièce 1, et introduction des pattes 12 dans les zones 41 des encoches 4 en arc de cercle, une rotation relative de la pièce 10 par rapport à la pièce 1 dans le sens de la flèche A provoquera une légère déformation élastique des pattes 12 radialement vers l'intérieur, leur surface inférieure 13 coulissant sur les rampes 7 des zones arquées 43. Après dépassement des butées de blocage 9, les pattes 12 reviendront radialement vers l'extérieur en pénétrant dans les zones arquées 42, leur surface inférieure 13 venant en appui sur l'arc de cercle 8 et leur bord correspondant 14 coopérant avec la butée 9 pour empêcher toute rotation en sens inverse, autour d'un axe passant par le centre 3 et perpendiculaire au plan de jonction des deux pièces.

On obtient ainsi, et très rapidement, un excellent assujettissement des pièces 1 et 10 l'une à l'autre.

Concernant les pattes élastiques 12, on peut encore noter qu'il est avantageux de les conformer de telle manière que la hauteur moyenne h de l'espace ménagé entre leur surface inférieure 13 et le plan supérieur de la partie plane de la pièce 10 soit légèrement inférieure à l'épaisseur de la tôle qui constitue la pièce 1 (voir figure 3). De la sorte, après leur assemblage les pièces 1 et 10 seront légèrement pressées l'une contre l'autre, du fait de l'élasticité des pattes 12, ce qui évitera tout jeu générateur de bruit et d'usure, entre ces deux pièces.

Un dispositif de liaison tel que celui qui vient d'être décrit peut être utilisé avantageusement pour fixer sur le berceau d'un véhicule automobile des plots élastiques destinés à assurer une liaison élastique entre ce berceau et le châssis ; il pourra s'agir par exemple d'un berceau sur lequel sont fixés le groupe motopropulseur et le train avant du véhicule.

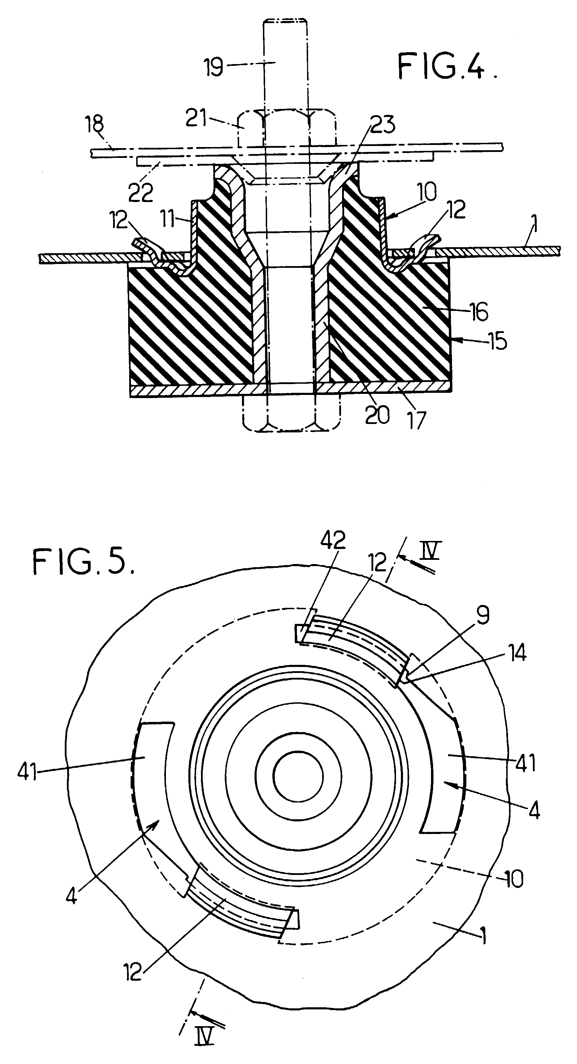

Un tel plot élastique a été représenté à la figure 4, et est désigné par la référence 15. Ce plot comporte une masse de matière élastique 16, par exemple un élastomère, adhérisée entre une plaque d'armature extérieure 17 et une pièce 10 en tôle, qui peut être précisément celle des figures 2 et 3. La tôle constituant le berceau est découpée conformément à la représentation de la figure 1 et a été référencée en 1. Il est donc très facile et économique de fixer un tel plot élastique 15 sur le berceau 1 du véhicule, en procédant comme indiqué plus haut pour assujettir la pièce 10 sur la pièce 1. Lorsque ce plot a été fixé sur la tôle 1, on peut le fixer sur le châssis 18 du véhicule de façon classique, grâce à un seul boulon 19, lequel traverse un tube de passage axial rigide 20 du plot 15, autour duquel la masse élastique 16 est également adhérisée, ce tube constituant une armature intérieure du plot. Le serrage du boulon 19 sur le châssis 18 est assuré par un écrou 21, et une rondelle 22 à trou conique est interposée entre la tôle 18 et l'extrémité évasée 23 du tube 20, ceci pour éviter que cette extrémité, qui sert de butée et qui reçoit donc l'effort de serrage de l'écrou, ne déforme à la longue la tôle 18.

La figure 5 est une vue de dessus de l'assemblage ainsi réalisé, abstraction faite du boulon 19, de l'écrou 21, de la tôle 18 et de la rondelle 22.

L'invention permet ainsi d'éviter l'utilisation habituelle de trois ou quatre ensembles vis-écrou pour assurer la fixation du plot 15 sur le berceau 1. Le dispositif de liaison de l'invention permet une fixation extrêmement rapide et économique, tout en assurant la même sécurité qu'un système classique à vis et écrous.

## Revendications

1. Dispositif de liaison comportant deux pièces mécaniques (1, 10), ces pièces étant en tôle et ladite liaison devant assurer, après sa mise en oeuvre, un double blocage, à savoir la mise en pression des deux dites pièces (1, 10) l'une contre l'autre selon un plan de jonction commun, en les empêchant d'une part de s'écarter de cette position de mise en pression mutuelle, et d'autre part de pivoter l'une par rapport à l'autre autour d'un axe (3) perpendiculaire à leur plan de jonction, dans lequel :
(a) l'une (1) desdites pièces comporte au moins une encoche en arc de cercle (4) centrée sur ledit axe (3) et présentant :
- (aa) une première zone arquée (41) possédant radialement une première largeur ;
- (ab) une seconde zone arquée (42) possédant radialement une seconde largeur, plus petite que ladite première largeur, cette seconde zone, considérée selon un sens de rotation déterminé (A) autour dudit axe, faisant suite à la première zone ;
ce dispositif étant caractérisé en ce qu'il comporte:
- (ac) une troisième zone (43) disposée entre la première zone et la seconde zone, cette troisième zone ayant radialement une largeur progressivement décroissante dans ledit sens (A) de rotation déterminé, cette largeur ayant comme valeur maximale celle de ladite première zone arquée (41), et comme valeur minimale une largeur au plus égale à celle de ladite seconde zone arquée (42) ; en ce que
(b) l'autre (10) desdites pièces comporte au moins une patte (12) élastique en flexion et propre s'engager dans ladite première zone arquée (41) de l'encoche (4) précitée lorsque les deux pièces sont amenées l'une contre l'autre, ladite patte ayant à ayant à cet effet, en direction radiale, une largeur légèrement inférieure à celle de ladite première zone arquée (41), mais supérieure à celle de ladite seconde zone arquée (42), de sorte que la rotation relative de ladite autre pièce (10) autour de l'axe (3) précité, dans ledit sens (A) de rotation déterminé, assure le double blocage susmentionné des deux dites pièces l'une par rapport à l'autre ; et en ce que ladite patte (12) est obtenue par découpage et pliage de la tôle de ladite autre pièce (10) et est conformée de manière à prendre appui élastiquement contre ladite rampe (7) de la troisième zone arquée (43), lors de sa rotation dans ledit sens de rotation déterminé (A), la hauteur moyenne de l'espace ménagé entre la surface inférieure (13) de la patte (12) et le plan supérieur de la tôle constituant la pièce correspondante (10) étant légèrement inférieure à l'épaisseur de la tôle (1) comportant l'encoche en arc de cercle (4).

2. Dispositif selon la revendication 1, dans lequel ladite valeur minimale de la largeur radiale de la troisième zone arquée (43) est inférieure à celle de la seconde zone arquée (42), de sorte à constituer pour ladite patte (12) une butée de blocage (9) l'empêchant, lorsqu'elle a été introduite dans ladite seconde zone arquée (42), de pivoter dans le sens de rotation opposé audit sens de rotation déterminé (A), et de revenir ainsi dans ladite première zone arquée (41).

3. Dispositif selon la revendication 2, dans lequel l'un des bords de l'encoche (4) en arc de cercle présente la forme d'un arc de cercle (6) dans ladite première zone (41) et la forme d'un arc de cercle (8) de rayon différent du précédent dans ladite seconde zone (42), ces deux arcs de cercle étant reliés par une rampe (7) constituant le bord correspondant de ladite troisième zone arquée (43).

4. Dispositif selon la revendication 1, dans lequel sont prévues deux encoches en arc de cercle (4) préférablement symétriques l'une de l'autre par rapport audit axe (3), ainsi que deux pattes élastiques (12) disposées l'une par rapport à l'autre dans la même position relative que lesdites encoches, de sorte à pouvoir s'engager chacune et respectivement, simultanément dans la première zone arquée (41) desdites encoches (4) lors de la mise en oeuvre de ladite liaison.

5. Dispositif selon la revendication 4, dans lequel lesdites pièces en tôle comportent un système de centrage relatif disposé intérieurement par rapport auxdites encoches et présentant sur l'une desdites pièces une ouverture circulaire (2), et sur l'autre pièce un collet (11) à section circulaire, propre à s'engager dans ladite ouverture (2) lors de la mise en oeuvre de ladite liaison.

6. Dispositif selon la revendication 5, dans lequel ladite ouverture circulaire (2) est ménagée dans la pièce (1) qui comporte lesdites encoches (4) en arc de cercle, et ledit collet (11) dans la pièce (10) qui comporte lesdites pattes (12).

7. Plot élastique, en particulier destiné à assurer une liaison élastique entre un berceau (1) et un châssis (18) de véhicule, du type comprenant un dispositif de liaison conforme à l'une quelconque des revendications précédentes, une masse de matière élastique (16) adhérisée autour d'un tube (20) de passage rigide ainsi qu'entre une plaque d'armature (17) et une pièce en tôle (10), cette pièce en tôle (40) étant assujettie sur ledit berceau (1) et le plot (15) pouvant ensuite être fixé sur ledit châssis (18) grâce à un unique boulon (19) traversant ledit tube (20) et fixé au châssis (18) par un écrou (2) de serrage.

## Patentansprüche

1. Verbindungsvorrichtung zwischen zwei mechanischen Teilen (1, 10), wobei diese Teile aus Blech sind und die Verbindung nach deren Ausführung eine doppelte Sicherung gewährleisten muß, das heißt ein Pressen der zwei Teile (1, 10) gegeneinander entsprechend einer gemeinsamen Verbindungsebene, indem verhindert wird, daß sie sich einerseits an der gegenseitigen Andrückstelle voneinander entfernen, und andererseits das eine bezüglich des anderen um eine zu deren Verbindungsebene senkrechte Achse (3) schwenkt, bei welchem
(a) das eine (1) der Teile zumindest eine zu der Achse (3) zentrische, kreisbogenförmige Ausnehmung (4) hat, welche aufweist:
- (aa) eine erste bogenförmige Zone (41), die radial eine erste Breite hat, und
- (ab) eine zweite bogenförmige Zone (42), die radial eine zweite Breite hat, die kleiner als die erste Breite ist, wobei die zweite Zone bei Betrachtung einer festgelegten Drehrichtung (A) um die Achse auf die erste Zone folgt,
dadurch **gekennzeichnet,** daß die Verbindungsvorrichtung
- (ac) eine dritte Zone (43) aufweist, die zwischen der ersten und der zweiten Zone angeordnet ist, wobei die dritte Zone in radialer Richtung eine Breite hat, die in der festgelegten Drehrichtung (A) fortlaufend abnimmt, und diese Breite als maximalen Wert diejenige der ersten Zone (41) und als minimalen Wert eine Breite hat, die höchstens gleich derjenigen der zweiten bogenförmigen Zone (42) ist, und daß
(b) das andere (10) der Teile zumindest einen biegeeleastischen Lappen (12) hat, der geeignet ist, in die erste bogenförmige Zone (41) der vorerwähnten Ausnehmung (4) einzugreifen, wenn die zwei Teile ineinander einzubringen sind, wobei der Lappen hierzu in radialer Richtung eine Breite hat, die etwas geringer ist als diejenige der ersten bogenförmigen Zone (41), aber größer als die in der zweiten bogenförmigen Zone (42) ist, so daß die relative Drehbewegung zu dem ersten Teil (10) um die vorerwähnte Achse (3) in der festgelegten Drehrichtung (A) die eingangs erwähnte doppelte Sicherung der beiden Teile gegeneinander gewährleistet, und daß der Lappen (12) durch Stanzen und Falzen des Blechs des anderen Teils (10) geschaffen und derart angepaßt ist, daß es sich bei dessen Drehbewegung um die festgelegte Drehachse (A) elastisch an einer Schräge (7) der dritten bogenförmigen Zone (43) abstützt, wobei die mittlere Höhe des Zwischenraums zwischen der unteren Fläche (13) des Lappens (12) und der oberen Fläche des das entsprechende Teil (10) bildenden Blechs ein wenig geringer als die Dicke des Blechs (1) ist, das die kreisbogenförmige Ausnehmung (4) aufweist.

2. Vorrichtung nach Anspruch 1, bei welchem der minimale Wert der radialen Breite der dritten bogenförmigen Zone (43) geringer ist als diejenige der zweiten bogenförmigen Zone (42), so daß für den Lappen (12) ein Sperranschlag (9) gebildet ist, der, wenn er in die zweite bogenförmige Zone (42) eingeführt worden ist, ein Verschwenken in der der festgelegten Drehrichtung (A) entgegengesetzten Drehrichtung, und auch ein Zurückkehren in die erste bogenförmige Zone (41) verhindert.

3. Vorrichtung nach Anspruch 2, bei welchem einer der Ränder der kreisbogenförmigen Ausnehmung (4) die Form eines Kreisbogens (6) in der ersten Zone (41) und die Form eines Kreisbogens (8) mit einem zu dem vorhergehenden Kreisbogen (6) unterschiedlichen Radius in der zweiten Zone (42) aufweist, wobei diese beiden Kreisbogen durch die Schräge (7) verbunden sind, welche den Rand bildet, welcher der dritten bogenförmigen Zone (43) entspricht.

4. Vorrichtung nach Anspruch 1, bei welchem zwei kreisbogenförmige Ausnehmungen (4) vorzugsweise symmetrisch bezüglich der Achse (3) und auch zwei elastische Lappen (12) vorgesehen sind, die zueinander in derselben relativen Position wie die Ausnehmungen angeordnet sind, so daß diese jeweils gleichzeitig in die erste bogenförmige Zone (41) der Ausnehmungen (4) bei der Ausführung des Verbindungsvorgangs eingreifen können.

5. Vorrichtung nach Anspruch 4, bei welchem die Teile aus Blech ein relatives Zentriersystem haben, das im Inneren bezüglich der Ausnehmungen angeordnet ist und an einem der Teile eine kreisförmige Öffnung (2) und an dem anderen Teil einen Kragen (11) mit kreisförmigem Querschnitt aufweist, der geeignet ist, bei dem Ausführen des Verbindungsvorgangs in die Öffnung (2) einzugreifen.

6. Vorrichtung nach Anspruch 5, bei welchem die kreisförmige Öffnung (2) in dem Teil (1), das die kreisbogenförmige Ausnehmung (4) aufweist, und der Kragen (11) an dem Teil (10) vorgesehen ist, das die Lappen (12) aufweist.

7. Elastischer Block, der insbesondere dazu bestimmt ist, eine elastische Verbindung zwischen einem Aufbau (1) und einem Fahrzeugchassis (18) zu gewährleisten, enthaltend eine Verbindungsvorrichtung gemäß einem der vorhergehenden Ansprüche, eine Masse (16) aus elastischem Material, die um ein steifes Durchgangsrohr (20) herum sowie zwischen einer Abdeckplatte (17) und dem Blechteil (10) eingeklebt ist, wobei das Blechteil (10) an dem Aufbau (1) gesichert ist und der Block (15) auf dem Chassis (18) mittels einer einzigen, durch das Rohr (20) hindurchgehenden und an dem Chassis (18) mittels einer Feststellmutter (2) befestigten Bolzens (19) befestigt ist.

## Claims

1. Connection device between two mechanical components (1, 10), these components being made from sheet material and the said connection having to bring about, after its implementation, a double locking, namely pressing the two said components (1,10) against one another along a common joining plane, preventing them, on the one hand, from moving away from this mutual pressing position, and on the other hand, from pivoting with respect to one another about an axis (3) perpendicular to their joining plane, in which:
(a) one (1) of the said components comprises at least one key-hole (4) in the shape of an arc of a circle centred on the said axis (3) and having :
- (aa) a first arched zone (41) radially having a first width ;
- (ab) a second arched zone (42) radially having a second width, smaller than the said first width, this second zone, considered according to a predetermined direction of rotation (1) about the said axis, following the first zone ; this device being characterized in that it comprises :
- (ac) a third zone (43) arranged between the first zone and the second zone, this third zone radially having a width which decreases progressively in the said predetermined direction (A) of rotation, this width having, as its maximum value, that of the said first arched zone (41), and as its minimum value, a width which is at most equal to that of the second arched zone (42) ; in that
(b) the other (10) of the said components comprises at least one elastic locking tab (12) suitable for engaging in the said first arched zone (41) of the aforementioned key-hole (4) when the two components are brought against one another, the said locking tab having, for this purpose, in the radial direction, a width which is slightly less than that of the sais first arched zone (41), but greater than that of the said second arched zone (42), so that relative rotation of the said other component (10) about the aforementioned axis (3), in the said predetermined direction (A) of rotation, brings about the abovementioned double locking of the two said components with respect to one another ; and in that the said locking tab (12) is obtained by cutting and folding the material sheet of the said other component (10) and is shaped so as to bear elastically against the said ramp (7) of the third arched zone (43), during its rotation in the said predetermined direction of rotation (A) ; the mean height of the space left between the lower surface (13) of the locking tab (12) and the upper plane of the material sheet constituting the corresponding component (10) being slightly less than the thickness of the material sheet (1) comprising the key-hole in the shape of an arc of a circle (4).

2. Device according to claim 1, in which the said minimum value of the radial width of the third arched zone (43) is less than that of the second arched zone (42), so as to constitute a locking notch (9) for the said locking tab (12) preventing it, when it has been introduced into the said second arched zone (42), from pivoting in the direction of rotation opposite the said predetermined direction (A) of rotation, and from thus returning to the said first arched zone (41).

3. Device according to claim 2, in which one of the edges of the key-hole in the shape of an arc of a circle (4) has the shape of an arc of a circle (6) in the said first zone (41) and the shape of an arc of a circle (8) of radius different from the previous one in the said second zone (42), these two arcs of a circle being connected by a ramp (7) constituting the corresponding edge of the said third arched zone (43).

4. Device according to claim 1, in which two key-holes (4) in the shape of an arc of a circle are provided, and are preferably symmetrical with one another with respect to the said axis (3), as well as two elastic locking tabs (12) arranged with respect to one another in the same relative position as the said key-holes, so as to be able each and respectively to engage simultaneously in the first arched zone (41) of the said key-holes (4) when the said connection is implemented.

5. Device according to claim 4, in which the said sheet material components comprise a relative centering system arranged internally with respect to the said key-holes and having a circular opening (2) on one of the said components and a collar (11) of circular cross-section on the other component, suitable for engaging in the said opening (2) when the said connection is implemented.

6. Device according to claim 5, in which the said circular opening (2) is made in the component (1) which comprises the said key-holes (4) in the shape of an arc of a circle, and the said collar (11) is made in the component (10) which comprises the said locking tabs (12).

7. Elastic suspension mount, in particular intended to bring about an elastic connection between a subframe (1) and a vehicle body (18), of the type comprising a mass of elastic matter (16) bonded around a rigid through-tube (20) and between an armature plate (17) and a sheet material component (10), this sheet material (40) component being rigidly connected to the said subframe (1) and the suspension mount (15) being able to then be fixed to the said body (18) by virtue of a single bolt (19) passing through the said tube and fixed to the body (18) by a lock nut (2).
